(19) Europäisches Patentamt
European Patent Office
Office européen des brevets

(11) **EP 2 071 397 A1**

(12) **EUROPEAN PATENT APPLICATION**

(43) Date of publication:
**17.06.2009 Bulletin 2009/25**

(51) Int Cl.:
*G03B 15/05* (2006.01)  *H04N 5/235* (2006.01)

(21) Application number: **08171389.3**

(22) Date of filing: **11.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.12.2007 JP 2007322034**

(71) Applicant: **Sony Corporation**
**Tokyo (JP)**

(72) Inventors:
• **Shimoda, Ryuichi**
**TOKYO (JP)**

• **Komiya, Yoshimitsu**
**TOKYO (JP)**
• **Shimizu, Shuji**
**TOKYO (JP)**
• **Yanagi, Daigo**
**TOKYO (JP)**

(74) Representative: **Thévenet, Jean-Bruno et al**
**Cabinet Beau de Loménie**
**158, rue de l'Université**
**75340 Paris Cédex 07 (FR)**

(54) **Image-pickup device, method for controlling image-pickup device, program of method for controlling image-pickup device and recording medium having recorded program of method for controlling image-pickup device thereon**

(57)    There is provided an image-pickup device (1) including a light-emitting unit (12), an image-pickup unit (4), a brightness detection unit (11) that detects an evaluation value, and a control unit (14) that controls, on the basis of the evaluation value, the amount of light that the light-emitting unit (12) is to emit. The control unit (14) calculates the amount of light to be emitted in a case of main emission on the basis of the amount of emitted light in a case of pre-emission by using an evaluation value in a case of no emission, an evaluation value in a case of pre-emission, and a target value. The control unit (14) multiples the amount of light to be emitted in a case of main emission by a correction coefficient, and causes the light-emitting unit (12) to perform main emission so as to achieve the corrected amount of light to be emitted.

FIG. 2

**Description**

CROSS REFERENCES TO RELATED APPLICATIONS

The present invention contains subject matter related to Japanese Patent Application JP 2007-322034 filed in the Japanese Patent Office on December 13, 2007.

BACKGROUND OF THE INVENTION

1. Field of the Invention

The present invention relates to an image-pickup device, a method for controlling the image-pickup device, a program of the method for controlling the image-pickup device, and a recording medium on which the program of the method for controlling the image-pickup device is recorded. For example, the present invention can be applied to a mobile phone with a camera or an electronic still camera. In the present invention, the amount of light to be emitted in a case of main emission is calculated on the basis of the amount of light emitted in a case of pre-emission by using an evaluation value obtained in a case of no emission, an evaluation value obtained in a case of pre-emission, and a target value for the evaluation values. Then, the amount of light to be emitted in a case of main emission is corrected using a correction coefficient whose value monotonically decreases in accordance with an increase in brightness of an object obtained in a case of no emission. Thus, the amount of light to be emitted in a case of main emission is more appropriately set, compared with the related art.

2. Description of the Related Art

In the related art, when photographing is performed using an image-pickup device, such as a mobile phone with a camera or an electronic still camera, a light-emitting unit is caused to emit light in order to make up for a shortage of the amount of light in dark places. Hereinafter, emission performed by the light-emitting unit is referred to as "main emission".

In a manner that has been recently provided, in the image-pickup device, the light-emitting unit is caused to emit light in advance, and detects the brightness of an object. The amount of light to be emitted in a case of main emission is set on the basis of the detection result of the brightness of the object. Hereinafter, emission performed in advance is referred to as "pre-emission".

As a method for setting the amount of light to be emitted in a case of main emission, for example, a method is proposed in Japanese Unexamined Patent Application Publication No. 5-127215, in which the amount of light to be emitted in a case of main emission is calculated on the basis of the amount of light emitted in a case of pre-emission by using the brightness of an object obtained in a case of no emission, the brightness of the object obtained in a case of pre-emission, and a target brightness of the object.

Furthermore, a method for setting the amount of light to be emitted in a case of main emission in consideration of a distance to an object is proposed in Japanese Unexamined Patent Application Publication No. 2003-262903.

The methods disclosed in Japanese Unexamined Patent Application Publication No. 5-127215 and so forth are useful because the amount of light to be emitted in a case of main emission can be very easily set in a short time. However, the methods have a problem that the accuracy of setting the amount of light to be emitted is insufficient for practical use.

SUMMARY OF THE INVENTION

In view of the above-described circumstances, it is desirable to propose an image-pickup device capable of more appropriately setting the amount of light to be emitted in a case of main emission, compared with the related art, a method for controlling the image-pickup device, a program of the method for controlling the image-pickup device, and a recording medium on which the program of the method for controlling the image-pickup device is recorded.

According to an embodiment of the present invention, there is provided an image-pickup device including a light-emitting unit configured to emit illuminating light to an object; an image-pickup unit configured to photograph the object; a brightness detection unit configured to detect an evaluation value indicating brightness of the object; and a control unit configured to control, on the basis of the evaluation value detected by the brightness detection unit, an amount of light that the light-emitting unit is to emit. The control unit calculates, on the basis of an amount of light emitted from the light-emitting unit in a case of pre-emission, an amount of light to be emitted in a case of main emission that is a case in which the light-emitting unit is to be caused to perform main emission, by using an evaluation value in a case of no emission that is detected by the brightness detection unit in a state in which the light-emitting unit is not caused to emit light, an evaluation value in a case of pre-emission that is detected by the brightness detection unit in a case in which the light-emitting unit is caused to perform pre-emission, and a target value for the evaluation values. Then, the control unit multiples the amount of light to be emitted in a case of main emission by a correction coefficient whose value monotonically decreases in accordance with an increase in brightness of the object in a case of no emission, thereby correcting the amount of light to be emitted in a case of main emission. The control unit causes the light-emitting unit to perform main emission so as to achieve the corrected amount of light to be emitted in a case of main emission.

According to an embodiment of the present invention, there is provided a method for controlling an image-pickup device including a light-emitting unit configured to emit illuminating light to an object; an image-pickup unit configured to photograph the object; a brightness detection unit configured to detect an evaluation value indicating brightness of the object; and a control unit configured to control, on the basis of the evaluation value detected by the brightness detection unit, an amount of light that the light-emitting unit is to emit. The method for controlling the image-pickup device includes obtaining an evaluation value in a case of no emission that is detected by the brightness detection unit in a state in which the light-emitting unit is not caused to emit light; detecting brightness of the object in the state in which the light-emitting unit is not caused to emit light, thereby detecting the brightness of the object in a case of no-emission; obtaining an evaluation value in a case of pre-emission that is detected by the brightness detection unit in a case in which the light-emitting unit is caused to perform pre-emission; calculating, on the basis of an amount of light emitted from the light-emitting unit in a case of pre-emission, an amount of light to be emitted in a case of main emission that is a case in which the light-emitting unit is to be caused to perform main emission by using the evaluation value in a case of no emission, the evaluation value in a case of pre-emission, and a target value for the evaluation values; correcting the amount of light to be emitted in a case of main emission by multiplying the amount of light to be emitted in a case of main emission by a correction coefficient whose value monotonically decreases in accordance with an increase in the brightness of the object in a case of no emission; and causing the light-emitting unit to perform main emission in order to achieve the amount of light to be emitted in a case of main emission that has been corrected in the correcting.

According to an embodiment of the present invention, there is provided a program of a method for controlling an image-pickup device including a light-emitting unit configured to emit illuminating light to an object; an image-pickup unit configured to photograph the object; a brightness detection unit configured to detect an evaluation value indicating brightness of the object; and a control unit configured to control, on the basis of the evaluation value detected by the brightness detection unit, an amount of light that the light-emitting unit is to emit. The program includes obtaining an evaluation value in a case of no emission that is detected by the brightness detection unit in a state in which the light-emitting unit is not caused to emit light; detecting brightness of the object in the state in which the light-emitting unit is not caused to emit light, thereby detecting the brightness of the object in a case of no-emission; obtaining an evaluation value in a case of pre-emission that is detected by the brightness detection unit in a case in which the light-emitting unit is caused to perform pre-emission; calculating, on the basis of an amount of light emitted from the light-emitting unit in a case of pre-emission, an amount of light to be emitted in a case of main emission that is a case in which the light-emitting unit is to be caused to perform main emission by using the evaluation value in a case of no emission, the evaluation value in a case of pre-emission, and a target value for the evaluation values; correcting the amount of light to be emitted in a case of main emission by multiplying the amount of light to be emitted in a case of main emission by a correction coefficient whose value monotonically decreases in accordance with an increase in the brightness of the object in a case of no emission; and causing the light-emitting unit to perform main emission in order to achieve the amount of light to be emitted in a case of main emission that has been corrected in the correcting.

According to an embodiment of the present invention, there is provided a recording medium on which a program of a method for controlling an image-pickup device is recorded. The image-pickup device includes a light-emitting unit configured to emit illuminating light to an object; an image-pickup unit configured to photograph the object; a brightness detection unit configured to detect an evaluation value indicating brightness of the object; and a control unit configured to control, on the basis of the evaluation value detected by the brightness detection unit, an amount of light that the light-emitting unit is to emit. The program includes obtaining an evaluation value in a case of no emission that is detected by the brightness detection unit in a state in which the light-emitting unit is not caused to emit light; detecting brightness of the object in the state in which the light-emitting unit is not caused to emit light, thereby detecting the brightness of the object in a case of no-emission; obtaining an evaluation value in a case of pre-emission that is detected by the brightness detection unit in a case in which the light-emitting unit is caused to perform pre-emission; calculating, on the basis of an amount of light emitted from the light-emitting unit in a case of pre-emission, an amount of light to be emitted in a case of main emission that is a case in which the light-emitting unit is to be caused to perform main emission by using the evaluation value in a case of no emission, the evaluation value in a case of pre-emission, and a target value for the evaluation values; correcting the amount of light to be emitted in a case of main emission by multiplying the amount of light to be emitted in a case of main emission by a correction coefficient whose value monotonically decreases in accordance with an increase in the brightness of the object in a case of no emission; and causing the light-emitting unit to perform main emission in order to achieve the amount of light to be emitted in a case of main emission that has been corrected in the correcting.

With a configuration in any one of the embodiments of the present invention, the amount of light to be emitted in a case of main emission is calculated on the basis of the amount of light emitted in a case of pre-emission by using the evaluation value in a case of no emission, the evaluation value in a case of pre-emission, and the target value. In such a case, the larger the amount of external light, the larger the calculated amount of light to be emitted in a case of main emission. Thus, the amount of light to be emitted in a case of main emission is multiplied by the correction coefficient whose value monotonically decreases in accordance with an increase in the brightness of the object in a case of no emission, thereby correcting the amount of light to be emitted in a case of main emission. The light-emitting unit is caused to perform main emission in order to achieve the corrected amount of light to be emitted in a case of main emission. Therefore, the amount of light to be emitted in a case of main emission can be more appropriately set, compared with the related art.

According to any one of the embodiments of the present invention, the amount of light to be emitted in a case of main emission can be more appropriately set, compared with the related art.

BRIEF DESCRIPTION OF THE DRAWINGS

Fig. 1 is a flowchart showing a processing procedure performed by a control system in an image-pickup device according to a first embodiment of the present invention;
Fig. 2 is a block diagram showing the image-pickup device according to the first embodiment of the present invention;
Fig. 3 is a diagram showing a photometric area of the image-pickup device shown in Fig. 2;
Fig. 4 is a diagram showing a model using the image-pickup device shown in Fig. 2;
Fig. 5 is a graph showing a characteristic curve of a correction coefficient;
Figs. 6A and 6B are graphs used to describe detection of evaluation values in cases of no emission and pre-emission when distances to an object are different; and
Figs. 7A and 7B are graphs used to describe detection of evaluation values in cases of no emission and pre-emission when the sizes of areas occupied by the object in the photometric area are different.

DESCRIPTION OF THE PREFERRED EMBODIMENTS

Embodiments of the present invention will be described below appropriately with reference to the accompanying drawings.

First Embodiment

(1) Configuration in First Embodiment

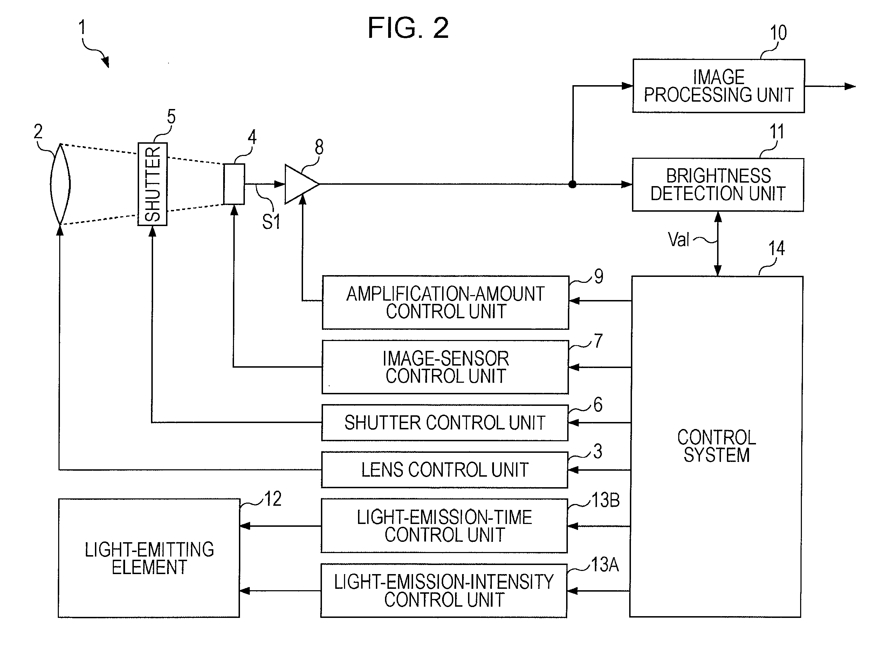

Fig. 2 is a block diagram showing an image-pickup device according to a first embodiment of the present invention. An image-pickup device 1 is, for example, a mobile phone with a camera. The image-pickup device 1 obtains a still image by control of a shutter button, and records the still image in a recording medium (not illustrated).

In the image-pickup device 1, a lens 2 is controlled by a lens control unit 3 so that a focal length of the lens 2 and the size of an iris of the lens 2 can be changed. The lens 2 converges incident light onto an image-pickup surface of an image sensor 4. The lens control unit 3 performs automatic focus control in accordance with an instruction issued by a control system 14, whereby the focal length of the lens 2 can be changed on the basis of image-pickup signals S1 that are output from the image sensor 4. The lens control unit 3 performs automatic iris control in accordance with an instruction issued by the control system 14, whereby the size of the iris of the lens 2 can be changed on the basis of the image-pickup signals S1 that are output from the image sensor 4 or on the basis of an evaluation value Val that is described below.

The shutter 5 operates in accordance with control performed by a shutter control unit 6 so that light that leaves the lens 2 can enter the image sensor 4. The shutter control unit 6 controls opening and closing of the shutter 5 in accordance with an instruction issued by the control system 14.

The image sensor 4 performs a photoelectric conversion process for an optical image formed on the image-pickup surface to output the image-pickup signals S1 that are to be processed as an image-pickup result. Additionally, the image sensor 4 switches the resolution of the image-pickup signals S1 in accordance with control performed by the image-sensor control unit 7, thereby switching the image-pickup result, which is output using the image-pickup signals S1, between a moving image and a still image. The image-sensor control unit 7 outputs, in accordance with an instruction issued by the control system 14, various types of timing signals that are necessary for operation of the image sensor 4. In addition, the image-sensor control unit 7 switches the timing signals in accordance with an instruction issued by the control system 14, thereby switching the image-pickup signals S1, which are output from the image sensor 4, between signals that are to be processed as a moving image and signals that are to be processed as a still image.

The amplification circuit 8 changes a gain in accordance with control performed by an amplification-amount control unit 9, thereby amplifying and outputting the image-pickup signals S1 output from the image sensor 4. The amplification-amount control unit 9 performs automatic gain control in accordance with an instruction issued by the control system 14, whereby the gain of the amplification circuit 8 can be variably controlled on the basis of the image-pickup signals S1 output from the amplification circuit 8.

The image processing unit 10 sequentially processes the image-pickup signals S1 that are output from the amplification circuit 8 as signals which are to be processed as a moving image and signals which are to be processed as a still image, thereby generating image data items of the moving and still images. The image processing unit 10 displays the image data items on a display unit (not illustrated). The image processing unit 10 stores the image data item of the still image in accordance with an instruction issued by the control system 14, and causes a recording medium (not illustrated) to record the image data item of the still image.

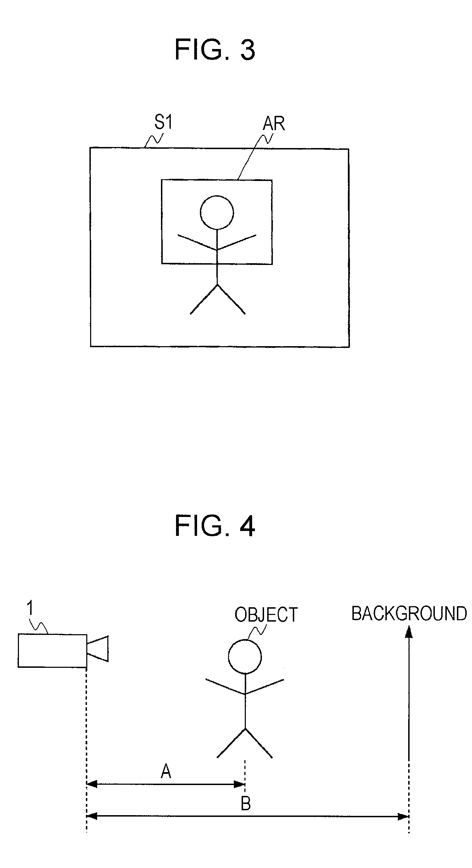

A brightness detection unit 11 detects the brightness of an object from the image-pickup signals S1 that are output from the amplification circuit 8. More specifically, as shown in Fig. 3, the brightness detection unit 11 integrates the image-pickup signals S1 in a predetermined photometric area AR in units of frames of the image-pickup signals S1. The photometric area AR is an area that is set in advance, and is an area in which an object most probably exists. For example, the photometric area AR is a rectangular-shaped area provided in the center of a display screen. The brightness detection unit 11 outputs an integration result as the evaluation value Val indicating the brightness of the object.

A light-emitting element 12 is, for example, a white-light-emitting diode having a high brightness, and performs pre-emission and main emission with a light-emission intensity stipulated by a light-emission-intensity control unit 13A for a light-emission time stipulated by a light-emission-time control unit 13B. When the light-emitting element 12 performs pre-emission, the light-emitting element 12 emits light with a fixed light-emission intensity for a fixed light-emission time.

In contrast, when the light-emitting element 12 performs main emission, the light-emitting element 12 emits light with a fixed light-emission intensity, and the light-emission time is variably controlled by the light-emission-time control unit 13B. Accordingly, the light-emitting element 12 performs pre-emission so as to achieve the amount of light to be emitted that is determined using the fixed light-emission intensity and the light-emission time that is variably controlled by the light-emission-time control unit 13B. In addition to variable control of the light-emission time, the light-emission intensity may be variably controlled, whereby the amount of light to be emitted in a case of main emission is controlled. A Xenon lamp or the like may be used as the light-emitting element 12 instead of a light-emitting diode.

The control system 14 controls operations of the image-pickup device 1 by executing a program that is recorded in a memory (not illustrated). In the first embodiment, the program is provided in such a manner that it is installed into the image-pickup device 1 in advance. However, the program may be provided in such a manner that it is recorded in any one of various types of recording mediums, such as optical disks, magnetic disks, or memory cards. Additionally, the program may be provided in such a manner that it is downloaded via a network, for example, the Internet.

When an image-pickup mode is set by control using a control element, the control system 14 instructs the corresponding units to pick up and display a moving image. More specifically, the control system 14 instructs the shutter control unit 6 to control the shutter 5 so that the shutter 5 is opened, and instructs the image-sensor control unit 7 to start obtaining a moving image. Additionally, the control system 14 instructs the lens control unit 3 to start the automatic focus control, and instructs the amplification-amount control unit 9 to start the automatic gain control. Consequently, in the image-pickup device 1, in a state in which the automatic focus control and the automatic gain control are performed, a moving image is picked up by the image sensor 4, and is displayed on the display unit (not illustrated).

Furthermore, in this case, the control system 14 determines an evaluation value Val[0] that is obtained by the brightness detection unit 11. The evaluation value Val[0] is an evaluation value obtained in a state in which the light-emitting element 12 is not caused to emit light, i.e., an evaluation value obtained in a case of no emission. When the evaluation value Val[0] obtained in a case of no emission is equal to or higher than a predetermined value, the control system 14 instructs the lens control unit 3 to start the automatic iris control, and sets an operation mode to a normal mode. Accordingly, when the brightness of an object is equal to or higher than the predetermined value, the image-pickup device 1 obtains a moving image using the automatic iris control, and displays the moving image.

In contrast, when the evaluation value Val[0] obtained in a case of no emission is lower than the predetermined value, the control system 14 instructs the lens control unit 3 to maintain a state in which the iris of the lens 2 is fully opened, and sets the operation mode to a strobe photographing mode.

Furthermore, when control of pushing the shutter button is continuously performed in the normal mode or the strobe photographing mode, the control system 14 instructs the image-sensor control unit 7 to obtain a still image instead of a moving image, and instructs the image processing unit 10 to perform a process for the obtained still image.

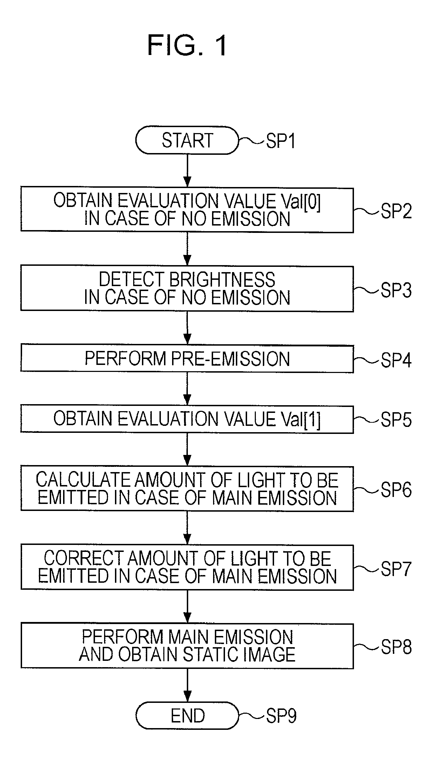

The corresponding units are controlled in accordance with control of pushing the shutter button. In the normal mode, the control system 14 obtains a still image with the image sensor 4 using the automatic iris control. In contrast, in the strobe photographing mode, the control system 14 performs a processing procedure shown in Fig. 1, thereby emitting stroboscopic light and obtaining a still image.

In other words, when control of pushing the shutter button is started, the control system 14 starts the processing procedure shown in Fig. 1, and proceeds from step SP1 to step SP2. In step SP2, the control system 14 obtains the evaluation value Val[0] obtained in a case of no emission, which was detected in advance. Next, the control system 14 proceeds to step SP3, and detects the brightness of an object. The brightness of an object that is detected in step SP3 does not include an influence of an image-pickup system of the image-pickup device 1. The control system 14 normalizes the evaluation value Val[0] obtained in a case of no emission, which has been obtained in step SP2, thereby detecting the brightness of an object. More specifically, the control system 14 corrects the evaluation value Val[0] obtained in a case of no emission by using the size of the iris, a charge accumulation time, and the gain of the amplification circuit 8 that were used when the evaluation value Val[0] in a case of no emission was obtained, thereby detecting the brightness of an object. Instead of processing the evaluation value Val[0] to detect the brightness of an object, a dedicated photometric unit may be provided to detect the brightness of an object. Then, the control system 14 proceeds to step SP4. In step SP4, the control system 14 instructs the light-emission-intensity control unit 13A and the light-emission-time control unit 13B to perform pre-emission. Additionally, when pre-emission is performed, the control system 14 instructs the lens control unit 3 to maintain a focus at an in-focus position detected using the automatic focus control. Accordingly, in this case, the image-pickup device 1 performs the automatic focus control using the amount of light emitted in a case of pre-emission to obtain a still image.

Next, the control system 14 proceeds to step SP5, and obtains an evaluation value Val[1] in a case of pre-emission that is detected by the brightness detection unit 11.

Then, the control system 14 proceeds to step SP6. In step SP6, the control system 14 calculates the amount of light to be emitted in a case of main emission on the basis of the amount of light emitted in a case of pre-emission by using the evaluation value Val[0] obtained in a case of no emission, which has been obtained in step SP2, the evaluation value Val[1] obtained in a case of pre-emission, which has been obtained in step SP5, and a target value Ref for a case of main emission related to the evaluation values Val[0] and Val[1]. Specifically, the control system 14 performs proportional calculation using the evaluation value Val[0] obtained in a case of no emission, the evaluation value Val[1] obtained in a case of pre-emission, and the target value Ref for a case of main emission, thereby calculating the amount of light to be emitted in a case of main emission on the basis of the amount of light emitted in a case of pre-emission.

As shown in Fig. 4, supposing that an object and a background exist at positions distances A and B (A < B) from the image-pickup device 1, respectively, and that the photometric area AR used to detect an evaluation value Val is occupied by the object, the control system 14 calculates the amount of light to be emitted in a case of main emission. Even when the light-emitting element 12 is not caused to emit light at all, light from the object enters the image-pickup device 1. An incident-light intensity in a case in which the light-emitting element 12 is not caused to emit light is defined as an external-light distance coefficient D. Herein, the units of the external-light distance coefficient D are [lux.m$^2$].

In the image-pickup device 1, when the light-emitting element 12 is not caused to emit light at all, the lens 2 converges external light from the object and the background onto the image sensor 4. The brightness of the object whose image is picked up by the image sensor 4 is detected by the brightness detection unit 11, thereby obtaining the evaluation value Val[0]. Thus, in this case, the following equation is true.

[Equation 1]

$$Val[0] \cdot K = T0 \cdot D \cdot G0 \quad ......(1)$$

In the equation (1), K is a constant. Val[0] is the evaluation value obtained in a case of no emission, which was obtained in advance, and the units of Val[0] are [lux·sec]. T0 is an exposure time. In this case, because a moving image is picked up by the image sensor 4, T0 is a charge accumulation time for the moving image. Additionally, G0 is the gain of the amplification circuit 8.

Furthermore, when pre-emission is performed, the following equation is true.

[Equation 2]

$$Val[1] \cdot K = T0 \cdot (Y1 + D) \cdot G0 \qquad \cdots\cdots(2)$$

In the equation (2), Val[1] is the evaluation value obtained in a case of pre-emission. Y1 is a light-emission intensity of the light-emitting element 12 in a case of pre-emission, and the units of Y1 are [cd]. The following equation can be obtained using the equations (1) and (2). A light-emission time of the light-emitting element 12 is sufficiently longer than the charge accumulation time of the image sensor 4.

[Equation 3]

$$\frac{Val[0]}{Val[1]} = \frac{D}{Y1 + D} \qquad \cdots\cdots (3)$$

Furthermore, when the equation (3) is solved, the following equation can be obtained, and the external-light distance coefficient D can be determined.

[Equation 4]

$$D = \frac{Y1 \cdot Val[0]}{Val[1] - Val[0]} \qquad \cdots\cdots (4)$$

In addition, similarly, when a light-emission intensity of the light-emitting element 12 and a gain of the amplification circuit 8 in a case of main emission are denoted by Y2 and G1, respectively, the following equation can be obtained. In the following equation, T1 is the light-emission time of the light-emitting element 12, and Ref is the target value.

[Equation 5]

$$Ref \cdot K \approx T1 \cdot (Y2 + D) \cdot G1 \qquad \cdots\cdots(5)$$

The following equation can be obtained using the equations (2) and (5).

7

[Equation 6]

$$\frac{Ref}{Val[1]} = \frac{T1}{T0} \cdot \frac{Y2+D}{Y1+D} \cdot \frac{G1}{G0} \quad \cdots\cdots (6)$$

When the equation (6) is solved, the following equation can be obtained.

[Equation 7]

$$T1 = \frac{Ref}{Val[1]} \cdot \frac{Y1+D}{Y2+D} \cdot T0 \cdot \frac{G0}{G1} \quad \cdots\cdots (7)$$

When the equation (4) is substituted into the equation (7), the following equation can be obtained.

[Equation 8]

$$T1 = \frac{Y1 + \dfrac{Y1 \cdot Val[0]}{Val[1] - Val[0]}}{Y2 + \dfrac{Y1 \cdot Val[0]}{Val[1] - Val[0]}} \cdot T0 \cdot \frac{G0}{G1}$$

$$= \frac{Ref}{Val[1]} \cdot \frac{Y1 \cdot Val[1]}{Y2(Val[1]-Val[0]) + Y1 \cdot Val[0]} \cdot T0 \cdot \frac{G0}{G1}$$

$$= \frac{Ref}{\left(\dfrac{Y2}{Y1} \cdot (Val[1] - Val[0]) + Val[0]\right)} \cdot T0 \cdot \frac{G0}{G1}$$

$$= \frac{Ref}{(Y \cdot (Val[1] - Val[0]) + Val[0])} \cdot T0 \cdot \frac{G0}{G1} \quad \cdots\cdots (8)$$

Y is a ratio of the light-emission intensity in a case of pre-emission to the light-emission intensity in a case of main emission, and the relationship Y = Y2/Y1 is obtained. The control system 14 performs an operation represented by the equation (8), thereby calculating the light-emission time T1 in a case of main emission. In the equation (8), values that are set in advance are used as the target value Ref, the light-emission-intensity ratio Y, and the light-emission intensity Y2 in a case of main emission. Next, the control system 14 proceeds to step SP7, and corrects the amount T1 of light to be emitted in a case of main emission (the light-emission time) that has been calculated in step SP6.

According to results of consideration in various manners, in a case in which the amount of light to be emitted in a case of main emission is calculated using the operation represented by the equation (8), when the amount of external light is large, an error in the amount of light to be emitted in a case of main emission becomes large. As a result, it is found that accuracy of setting the amount of light to be emitted in a case of main emission is insufficient.

Specifically, the amount of light to be emitted in a case of main emission is calculated using the operation represented by the equation (8) on supposition that the photometric area AR used to detect an evaluation value Val is occupied by the object. However, in reality, there is a case in which the background that is positioned behind the object partially occupies the photometric area AR. In this case, because the background is positioned behind the object, the brightness indicated by the evaluation value Val[1] detected in a case of pre-emission is lower than that indicated by a value obtained in a case in which the photometric area AR is occupied by the object. As a result, in this case, when the amount of light to be emitted in a case of main emission is calculated using the equation (8), it is much larger than an appropriate amount of light to be emitted.

Furthermore, in this case, the greater the difference between a change in the brightness of the object and a change in the brightness of the background that are obtained in response to light emitted from the light-emitting element 12, the greater the degree to which the brightness indicated by the evaluation value Val[1] detected in a case of pre-emission is lower than the original brightness of the object. Accordingly, the greater the difference between a distance A (shown in Fig. 4) from the image-pickup device 1 to the object and a distance B from the image-pickup device 1 to the background, i.e., the closer to the image-pickup device 1 the object is positioned, the lower the brightness indicated by the evaluation value Val[1]. As a result, in this case, when the amount of light to be emitted in a case of main emission is calculated using the equation (8), it is significantly larger than an appropriate amount of light to be emitted.

The higher the brightness of external light, the more a calculation error in the amount of light to be emitted is increased. Thus, in step SP7, the control system 14 performs an operation represented by the following equation, thereby correcting the amount T1 of light to be emitted in a case of main emission (the light-emission time) that has been calculated in step SP6.

[Equation 9]

$$T1A = R \cdot T1 \qquad ......(9)$$

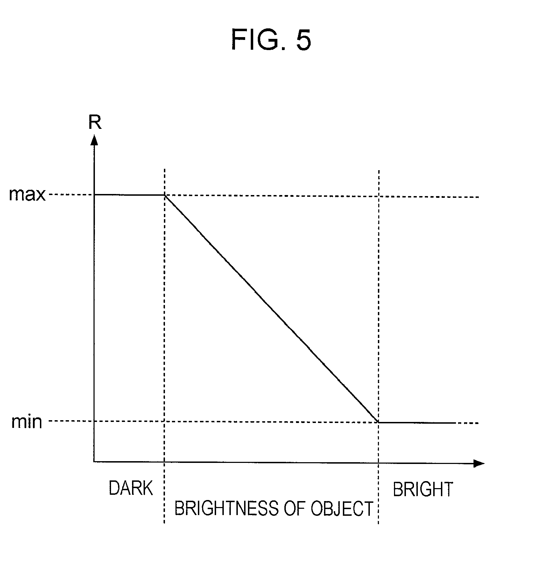

In the equation (9), as shown in Fig. 5, R is a correction coefficient that monotonically decreases in accordance with the brightness of the object that has been detected in step SP3. Fig. 5 shows a characteristic in which the correction coefficient R monotonically decreases in accordance with a linear function in which the brightness of the object is provided as a variable in a semilogarithmic plot whose horizontal axis is a logarithmic axis. Furthermore, a range in which the correction coefficient R becomes a stable value on a bright side is a range in which an evaluation value Val is determined as a value that is high enough to cause the normal mode to be selected. In addition, a range in which the correction coefficient R becomes a stable value on a dark side is a range in which the light-emission time T1 determined using the equation (8) is set so that light is emitted over the light-emission time T1.

After the control system 14 corrects the amount of light to be emitted in a case of main emission (the light-emission time), the control system 14 proceeds to the step SP8, and instructs the light-emission-intensity control unit 13A and the light-emission-time control unit 13B to perform main emission at Y= Y2/Y1, which has been set in the equation (8), for a light-emission time T1A, which has been calculated using the equation (9). In addition, the control system 14 instructs the image-sensor control unit 7 to obtain a still image. Furthermore, the control system 14 instructs the amplification-amount control unit 9 to set a gain so that the gain of the amplification circuit 8 is set to the gain G1. Moreover, when a still image is obtained in the image-pickup device 1, the control system 14 proceeds to step SP9, and terminates the processing procedure.

(2) Operation in First Embodiment

In the above-described configuration, in the image-pickup device 1 (shown in Fig. 2), when a user sets the operation mode to the photographing mode, an optical image that is formed on the image-pickup surface of the image sensor 4 by using the lens 2 is subjected to the photoelectric conversion process to generate the image-pickup signals S1 that are to be processed as a moving image. The image-pickup signals S1 that are to be processed as a moving image are amplified by the amplification circuit 8. Then, the image-pickup signals S1 are processed by the image processing unit 10, and displayed on the display unit. In this case, in the image-pickup device 1, the automatic focus control is performed by the lens control unit 3, and the automatic gain control is performed for the gain of the amplification circuit 8 by the amplification-amount control unit 9. Additionally, the brightness of the photometric area AR that is set in one display screen is detected by the brightness detection unit 11, and the automatic iris control is performed on the basis of an evaluation value Val that is obtained as a result of detection of the brightness of the photometric area AR or on the basis of the image-pickup signals S1.

Furthermore, when the user performs control of pushing the shutter button in this state, the image-pickup signals S1 that are to be processed as a still image instead of a moving image are obtained by the image sensor 4 in the image-pickup device 1. The image-pickup signals S1 that are to be processed as a still image are processed by the image processing unit 10, and are displayed. In addition, the still image is recorded in accordance with an instruction issued by the user.

However, there is a case in which a still image is picked up by the image-pickup device 1 in a dark place. Accordingly, in the image-pickup device 1, the evaluation value Val[0] obtained in a case of no emission, which is detected by the brightness detection unit 11, is determined in a state in which a moving image is being picked up. When the evaluation value Val[0] is lower than the fixed value, the operation mode is set to the strobe photographing mode. Additionally, when control of pushing the shutter button is performed in the strobe photographing mode, the light-emitting element 12 is caused to perform pre-emission in advance, and the amount of light to be emitted in a case of main emission is calculated. Then, the light-emitting element 12 is caused to perform main emission, and a still image is obtained.

Specifically, in the image-pickup device 1, pre-emission is performed, and the evaluation value Val[1] in a case of pre-emission is detected. The amount T1 of light to be emitted in a case of main emission is determined on the basis of the amount T0 of light emitted in a case of pre-emission by proportional calculation using the evaluation value Val[1] obtained in a case of pre-emission, the evaluation value Val[0] obtained in a case of no emission, and the target value Ref that is an evaluation value for a case of main emission (the equations (1) to (8)).

However, the amount T1 of light to be emitted in a case of main emission, which is determined by the above-described calculation, is calculated on supposition that the photometric area AR is occupied by the object. Thus, when photographing is performed using the photometric area AR which is partially occupied by the background in reality, the amount T1 of light to be emitted in a case of main emission includes an error with respect to the most appropriate amount of light to be emitted.

In other words, since the background is positioned behind the object, a change in the brightness of the background that is obtained in response to light emitted from the light-emitting element 12 is smaller than a change in the brightness of the object. Accordingly, when photographing is performed using the photometric area AR which is partially occupied by the background in reality, the evaluation value Val[1] obtained in a case of pre-emission is smaller than that obtained when the photometric area AR is occupied by the object. As a result, the amount of light to be emitted in a case of main emission that is determined by proportional calculation is much larger than an appropriate amount of light to be emitted. The higher the brightness of external light, the more the error in the amount of light to be emitted is increased.

Accordingly, in the image-pickup device 1, the amount T1 of light to be emitted in a case of main emission that has been determined by proportional calculation is multiplied by the correction coefficient R (shown in Fig. 5), the value of which monotonically decreases in accordance with an increase in the brightness of the object in a case of no emission, thereby correcting the amount T1 (T1A) of light to be emitted in a case of main emission. Main emission is performed in order to achieve the corrected amount T1A of light to be emitted in a case of main emission.

As a result, in the first embodiment, the amount of light to be emitted in a case of main emission can be determined as a more appropriate amount, compared with a case in which main emission is performed in order to achieve the amount T1 of light to be emitted in a case of main emission that has been only proportionally calculated.

Furthermore, regarding the correction coefficient R, the value thereof monotonically decreases in accordance with a linear function in which a logarithmic value of the brightness of the object in a case of no emission is provided. As a result, the amount of light to be emitted in a case of main emission can be more specifically determined as an appropriate amount.

(3) Effects of First Embodiment

With the above-described configuration, the amount of light to be emitted in a case of main emission is calculated on the basis of the amount of light emitted in a case of pre-emission by using the evaluation value obtained in a case of no emission, the evaluation value obtained in a case of pre-emission, and the target value for the evaluation values. Then, the amount of light to be emitted in a case of main emission is corrected using the correction coefficient whose value monotonically decreases in accordance with an increase in the brightness of the object in a case of no emission. Thus, the amount of light to be emitted in a case of main emission can be more appropriately set, compared with the related art.

More specifically, regarding the correction coefficient, the value thereof monotonically decreases in accordance with a characteristic of a linear function in which a logarithmic value of the brightness of the object in a case of no emission is provided as a variable. Thus, the amount of light to be emitted in a case of main emission can be more appropriately set, compared with the related art.

Furthermore, output signals of the image-pickup unit are integrated, thereby detecting an evaluation value. Even when the size of the iris or the magnification of the lens is changed and photographing is performed, the amount of light to be emitted in a case of main emission can be appropriately set.

Second Embodiment

In the first embodiment that has been described above, when a still image is picked up in the strobe photographing mode, the gain of the amplification circuit 8 is set to the maximum value thereof that has been set by the automatic gain control performed in a case in which a moving image has been picked up. Additionally, the iris of the lens 2 is set so as to be fully opened.

When pre-emission is performed in this state, there is a risk that the image-pickup signals S1 are saturated in a path from the image sensor 4 to the brightness detection unit 11 in the image-pickup device 1. In this case, because the evaluation value Val[1] in a case of pre-emission is not accurately detected in the image-pickup device 1, it is difficult to accurately set the amount of light to be emitted in a case of main emission.

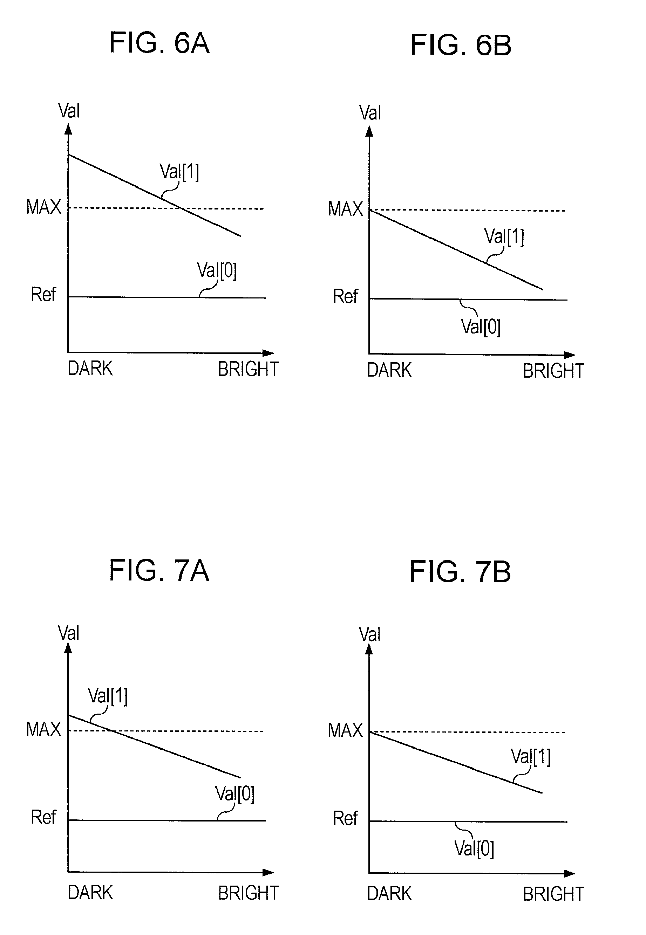

Figs. 6A and 6B are graphs used to describe detection of the evaluation values in cases of no emission and pre-emission. Figs. 6A and 6B show examples in which the sizes of areas occupied by the object in the photometric area AR are the same, and in which distances to the object are different. Fig. 6A shows an example of a short distance to the object, and Fig. 6B shows an example of a long distance to the object.

Figs. 6A and 6B are graphs provided on supposition that the automatic iris control and the automatic gain control are fully performed. In this case, even when the brightness of the object and the brightness of the background are different, the evaluation value Val[0] in a case of no emission is maintained as a substantially stable value by using the automatic iris control and the automatic gain control. In contrast, regarding the evaluation value Val[1] in a case of pre-emission, the shorter the distance to the object, the larger the change in the brightness of the object obtained in response to light emitted in a case of pre-emission. Thus, there is a high risk that the evaluation value Val[1] obtained in a case of pre-emission exceeds a detection limit (MAX) of a range in which an evaluation value can be accurately detected. When pre-emission is performed, the evaluation value Val[1] in a case of pre-emission is detected in accordance with the characteristics of the automatic iris control and the automatic gain control that have been performed. Thus, the higher the brightness of the object and the brightness of the background, the smaller the detected evaluation value Val[1].

In contrast to Figs. 6A and 6B, Figs. 7A and 7B show examples in which distances to the object are the same, and in which the sizes of areas occupied by the object in the photometric area AR are different. Fig. 7A shows an example of a large area occupied by the object in the photometric area AR, and Fig. 7B shows an example of a small area occupied by the object in the photometric area AR.

In this case, the larger the area occupied by the object in the photometric area AR, the larger the change in the brightness of the object obtained in response to light emitted in a case of pre-emission. Thus, there is a high risk that the evaluation value Val[1] obtained in a case of pre-emission exceeds the detection limit (MAX) of a range in which an evaluation value can be accurately detected.

Accordingly, in the second embodiment, when pre-emission is performed, the gain of the amplification circuit 8 is temporarily decreased so that the evaluation value Val[1] in a case of pr-emission does not exceed the detection limit (MAX) of a range in which an evaluation value can be accurately detected. Furthermore, in this case, instead of this manner, or in addition to this manner, the opening size of the iris is decreased so that the evaluation value Val[1] does not exceed the detection limit (MAX) of a range in which an evaluation value can be accurately detected.

As a matter of course, the above-described equations may be modified in accordance with a setting of the gain or a setting of the opening size of the iris in order to determine the amount of light to be emitted in a case of main emission.

In the second embodiment, because the gain of the amplification circuit 8 is decreased when pre-emission is performed, the evaluation value in a case of pre-emission can be more assuredly detected, and the amount of light to be emitted in a case of main emission can be more assuredly and appropriately set.

Third Embodiment

In the above-described embodiments, a rectangular-shaped area in the center of the display screen is set as the photometric area, and an evaluation value is detected. However, the method for detecting an evaluation value in any one of the embodiments of the present invention is not limited thereto. Various methods for detecting an evaluation value may be used. Examples of the various methods for detecting an evaluation value include setting of areas having various shapes as photometric areas; weighting and adding of integral values of a plurality of areas that are set on the display screen, thereby detecting an evaluation value; and direct detection of the amount of light incident from the lens, thereby detecting an evaluation value.

Furthermore, in the above-described embodiments, the amount of light to be emitted in a case of main emission is calculated by proportional calculation. The calculation method in any one of the embodiments of the present invention is not limited thereto. Various calculation methods can be broadly applied when the amount of light to be emitted in a case of main emission is calculated.

In addition, in the above-described embodiments of the present invention, application to a mobile phone with a camera is described. However, the application in any one of the embodiments of the present invention is not limited thereto. Broad application to an electronic still camera, a video camera having a still-image-pickup function, and so forth can be provided.

It should be understood by those skilled in the art that various modifications, combinations, sub-combinations and alterations may occur depending on design requirements and other factors insofar as they are within the scope of the appended claims or the equivalents thereof.

**Claims**

1.  An image-pickup device comprising:

   a light-emitting unit (12) configured to emit illuminating light to an object;
   an image-pickup unit (4) configured to photograph the object;
   a brightness detection unit (11) configured to detect an evaluation value indicating brightness of the object; and
   a control unit (14) configured to control, on the basis of the evaluation value detected by the brightness detection unit, an amount of light that the light-emitting unit (12) is to emit,
   wherein the control unit (14) calculates, on the basis of an amount of light emitted from the light-emitting unit (12) in a case of pre-emission, an amount of light to be emitted in a case of main emission that is a case in which the light-emitting unit (12) is to be caused to perform main emission, by using an evaluation value (Val [0]) in a case of no emission that is detected by the brightness detection unit (11) in a state in which the light-emitting unit (12) is not caused to emit light, an evaluation value (Val[1]) in a case of pre-emission that is detected by the brightness detection unit (11) in a case in which the light-emitting unit (12) is caused to perform pre-emission, and a target value for the evaluation values,
   wherein the control unit (14) multiples the amount of light to be emitted in a case of main emission by a correction coefficient whose value monotonically decreases in accordance with an increase in brightness of the object in a case of no emission, thereby correcting the amount of light to be emitted in a case of main emission, and
   wherein the control unit (14) causes the light-emitting unit (12) to perform main emission so as to achieve the corrected amount of light to be emitted in a case of main emission.

2.  The image-pickup device according to Claim 1, wherein the value of the correction coefficient monotonically decreases in accordance with a characteristic of a linear function in which a logarithmic value of the brightness of the object in a case of no emission is provided as a variable.

3.  The image-pickup device according to Claim 2, wherein the brightness detection unit (11) integrates output signals of the image-pickup unit (4), thereby detecting the evaluation value.

4.  The image-pickup device according to Claim 3, further comprising an amplification unit (8) configured to amplify the output signals of the image-pickup unit (4) by changing a gain,
   wherein the amplification unit (8) decreases the gain when pre-emission is performed.

5.  A method for controlling an image-pickup device,

the image-pickup device (1) including,
a light-emitting unit (12) configured to emit illuminating light to an object,
an image-pickup unit (4) configured to photograph the object,
a brightness detection unit (11) configured to detect an evaluation value indicating brightness of the object, and
a control unit (14) configured to control, on the basis of the evaluation value detected by the brightness detection unit, an amount of light that the light-emitting unit (12) is to emit,
the method for controlling the image-pickup device comprising the steps of:

obtaining an evaluation value in a case of no emission that is detected by the brightness detection unit (11) in a state in which the light-emitting unit (12) is not caused to emit light;
detecting brightness of the object in the state in which the light-emitting unit (12) is not caused to emit light, thereby detecting the brightness of the object in a case of no-emission;
obtaining an evaluation value in a case of pre-emission that is detected by the brightness detection unit (11) in a case in which the light-emitting unit (12) is caused to perform pre-emission;
calculating, on the basis of an amount of light emitted from the light-emitting unit (12) in a case of pre-emission, an amount of light to be emitted in a case of main emission that is a case in which the light-emitting unit (12) is to be caused to perform main emission by using the evaluation value in a case of no emission, the evaluation value in a case of pre-emission, and a target value for the evaluation values;
correcting the amount of light to be emitted in a case of main emission by multiplying the amount of light to be emitted in a case of main emission by a correction coefficient whose value monotonically decreases in accordance with an increase in the brightness of the object in a case of no emission; and
causing the light-emitting unit (12) to perform main emission in order to achieve the amount of light to be emitted in a case of main emission that has been corrected in the correcting.

6. A program of a method for controlling an image-pickup device (1),
the image-pickup device (1) including,
a light-emitting unit (12) configured to emit illuminating light to an object,
an image-pickup unit (4) configured to photograph the object,
a brightness detection unit (11) configured to detect an evaluation value indicating brightness of the object, and
a control unit (14) configured to control, on the basis of the evaluation value detected by the brightness detection unit (11), an amount of light that the light-emitting unit (12) is to emit,
the program comprising the steps of:

obtaining an evaluation value in a case of no emission that is detected by the brightness detection unit (11) in a state in which the light-emitting unit (12) is not caused to emit light;
detecting brightness of the object in the state in which the light-emitting unit (12) is not caused to emit light, thereby detecting the brightness of the object in a case of no-emission;
obtaining an evaluation value in a case of pre-emission that is detected by the brightness detection unit (11) in a case in which the light-emitting unit (12) is caused to perform pre-emission;
calculating, on the basis of an amount of light emitted from the light-emitting unit (12) in a case of pre-emission, an amount of light to be emitted in a case of main emission that is a case in which the light-emitting unit (12) is to be caused to perform main emission by using the evaluation value in a case of no emission, the evaluation value in a case of pre-emission, and a target value for the evaluation values;
correcting the amount of light to be emitted in a case of main emission by multiplying the amount of light to be emitted in a case of main emission by a correction coefficient whose value monotonically decreases in accordance with an increase in the brightness of the object in a case of no emission; and
causing the light-emitting unit (12) to perform main emission in order to achieve the amount of light to be emitted in a case of main emission that has been corrected in the correcting.

7. A recording medium on which a program of a method for controlling an image-pickup device is recorded,
the image-pickup device (1) including,
a light-emitting unit (12) configured to emit illuminating light to an object,
an image-pickup unit (4) configured to photograph the object, a brightness detection unit (11) configured to detect an evaluation value indicating brightness of the object, and
a control unit (14) configured to control, on the basis of the evaluation value detected by the brightness detection unit (11), an amount of light that the light-emitting unit (12) is to emit,
the program comprising the steps of:

obtaining an evaluation value in a case of no emission that is detected by the brightness detection unit (11) in a state in which the light-emitting unit (12) is not caused to emit light;

detecting brightness of the object in the state in which the light-emitting unit (12) is not caused to emit light, thereby detecting the brightness of the object in a case of no-emission;

obtaining an evaluation value in a case of pre-emission that is detected by the brightness detection unit (11) in a case in which the light-emitting unit (12) is caused to perform pre-emission;

calculating, on the basis of an amount of light emitted from the light-emitting unit (12) in a case of pre-emission, an amount of light to be emitted in a case of main emission that is a case in which the light-emitting unit (12) is to be caused to perform main emission by using the evaluation value in a case of no emission, the evaluation value in a case of pre-emission, and a target value for the evaluation values;

correcting the amount of light to be emitted in a case of main emission by multiplying the amount of light to be emitted in a case of main emission by a correction coefficient whose value monotonically decreases in accordance with an increase in the brightness of the object in a case of no emission; and

causing the light-emitting unit (12) to perform main emission in order to achieve the amount of light to be emitted in a case of main emission that has been corrected in the correcting.

# FIG. 1

START ~SP1

OBTAIN EVALUATION VALUE Val[0]
IN CASE OF NO EMISSION ~SP2

DETECT BRIGHTNESS
IN CASE OF NO EMISSION ~SP3

PERFORM PRE-EMISSION ~SP4

OBTAIN EVALUATION VALUE Val[1] ~SP5

CALCULATE AMOUNT OF LIGHT TO BE
EMITTED IN CASE OF MAIN EMISSION ~SP6

CORRECT AMOUNT OF LIGHT TO BE
EMITTED IN CASE OF MAIN EMISSION ~SP7

PERFORM MAIN EMISSION
AND OBTAIN STATIC IMAGE ~SP8

END ~SP9

# FIG. 2

EP 2 071 397 A1

# FIG. 3

# FIG. 4

FIG. 5

## FIG. 6A

## FIG. 6B

## FIG. 7A

## FIG. 7B

Europäisches
Patentamt
European
Patent Office
Office européen
des brevets

## EUROPEAN SEARCH REPORT

Application Number

EP 08 17 1389

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/156833 A1 (SHIMADA YOSHINAO [JP]) 21 August 2003 (2003-08-21) | 1-3,5-7 | INV. G03B15/05 H04N5/235 |
| Y | * paragraphs [0022] - [0045]; figure 1 * | 4 | |
| X | US 4 655 576 A (YUASA YOSHIO [JP] ET AL) 7 April 1987 (1987-04-07) | 1-3,5-7 | |
| Y | * column 2, line 55 - column 3, line 47; figures 1,3 * | 4 | |
| X,D | US 5 440 368 A (MOMOCHI NOBUCHIKA [JP]) 8 August 1995 (1995-08-08) | 1-3,5-7 | |
| Y | * columns 3-5 * | 4 | |
| Y | EP 1 765 006 A (SONY CORP [JP]) 21 March 2007 (2007-03-21) * paragraphs [0024] - [0028] * | 4 | |

TECHNICAL FIELDS
SEARCHED       (IPC)

G03B
H04N

The present search report has been drawn up for all claims

| Place of search | Date of completion of the search | Examiner |
|---|---|---|
| Munich | 13 March 2009 | Rückerl, Ralph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**EP 2 071 397 A1**

**ANNEX TO THE EUROPEAN SEARCH REPORT
ON EUROPEAN PATENT APPLICATION NO.**

EP 08 17 1389

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2009

| Patent document cited in search report | | Publication date | Patent family member(s) | | Publication date |
|---|---|---|---|---|---|
| US 2003156833 | A1 | 21-08-2003 | NONE | | |
| US 4655576 | A | 07-04-1987 | JP | 60162926 A | 24-08-1985 |
| US 5440368 | A | 08-08-1995 | JP | 5127215 A | 25-05-1993 |
| EP 1765006 | A | 21-03-2007 | CN | 1806432 A | 19-07-2006 |
| | | | JP | 3748267 B2 | 22-02-2006 |
| | | | JP | 2006005520 A | 05-01-2006 |
| | | | WO | 2005125185 A1 | 29-12-2005 |
| | | | US | 2008165265 A1 | 10-07-2008 |

EPO FORM P0459

For more details about this annex : see Official Journal of the European Patent Office, No. 12/82

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007322034 A
- JP 5127215 A
- JP 2003262903 A